# EUROPÄISCHE PATENTSCHRIFT

(11) **EP 1 728 615 B1**
(45) Veröffentlichungstag und Bekanntmachung des Hinweises auf die Patenterteilung: **02.09.2009**
(21) Anmeldenummer: 06009558.5
(22) Anmeldetag: 09.05.2006
(51) Int. Cl.: B29C 45/56

(54) **Verfahren zum Ausgleichen von Orientierung und/oder Verteilung von Füllstoffen in Spritzgussteilen**
Process for equalizing orientation and/or distribution of fillers in injection moulded parts
Procédé pour égaliser l'orientation et/ou la distribution des charges dans des articles moulés par injection

(30) Priorität: 02.06.2005 DE 102005025461
(43) Veröffentlichungstag der Anmeldung: 06.12.2006
(73) Patentinhaber: EMS-CHEMIE AG, 7013 Domat/Ems (CH)
(72) Erfinder: Jeltsch, Thomas, Dipl.-Ing., 7013 Domat / Ems (CH); Kägi, Werner, Dipl.-Chem.-Ing., 7013 Domat / Ems (CH)
(74) Vertreter: Pfenning, Meinig & Partner GbR

(56) Entgegenhaltungen:
- EP-A- 0 429 929
- DE-A1- 10 153 706
- GB-A- 2 306 378
- US-A- 3 246 055
- US-A- 6 004 499
- PATENT ABSTRACTS OF JAPAN Bd. 018, Nr. 666 (M-1724), 15. Dezember 1994 (1994-12-15) -& JP 06 262648 A (DU PONT KK), 20. September 1994 (1994-09-20)
- PATENT ABSTRACTS OF JAPAN Bd. 013, Nr. 036 (M-790), 26. Januar 1989 (1989-01-26) -& JP 63 247013 A (AGENCY OF IND SCIENCE & TECHNOL), 13. Oktober 1988 (1988-10-13)
- PATENT ABSTRACTS OF JAPAN Bd. 016, Nr. 321 (M-1279), 14. Juli 1992 (1992-07-14) -& JP 04 090309 A (HITACHI CHEM CO LTD), 24. März 1992 (1992-03-24)
- PATENT ABSTRACTS OF JAPAN Bd. 1998, Nr. 05, 30. April 1998 (1998-04-30) -& JP 10 000662 A (IDEMITSU KOSAN CO LTD), 6. Januar 1998 (1998-01-06)
- PATENT ABSTRACTS OF JAPAN Bd. 013, Nr. 485 (M-887), 6. November 1989 (1989-11-06) -& JP 01 192514 A (KOITO MFG CO LTD), 2. August 1989 (1989-08-02)
- PATENT ABSTRACTS OF JAPAN Bd. 2000, Nr. 08, 6. Oktober 2000 (2000-10-06) -& JP 2000 150283 A (BRIDGESTONE CORP), 30. Mai 2000 (2000-05-30)
- PATENT ABSTRACTS OF JAPAN Bd. 012, Nr. 332 (M-738), 8. September 1988 (1988-09-08) -& JP 63 095920 A (FUJI ELECTRIC CO LTD), 26. April 1988 (1988-04-26)
- PATENT ABSTRACTS OF JAPAN Bd. 015, Nr. 120 (M-1096), 25. März 1991 (1991-03-25) -& JP 03 010817 A (UBE IND LTD), 18. Januar 1991 (1991-01-18)

## Beschreibung

Die vorliegende Erfindung betrifft ein Verfahren zum Ausgleichen von Orientierung von Füllstoffen und/oder Verteilung von Füllstoffen in einer Formmasse aus gefülltem Kunststoff eines Spritzgussteils, insbesondere zur Isotropierung der Faserorientierung in einer faserverstärkten Formmasse. Die Verstärkungsstoffe können beispielsweise aus Glas, Kohlenstoff, Keramik, Aramid oder anderen Materialien bestehen. Unter dem Begriff "Faserverstärkung" sollen auch Materialien mit faserähnlicher, länglicher oder auch plättchenartiger Gestalt verstanden werden. Sie betrifft weiterhin ein entsprechendes Spritzgießverfahren, Verwendungen dieser Verfahren sowie entsprechende Spritzgussteile. Derartige Spritzgussteile werden beispielsweise als Bauteile in der Automobilindustrie eingesetzt. Dort ersetzen sie bisher metallische Bauteile, da sie gegenüber diesen nicht nur Vorteil wegen ihres geringen spezifischen Gewichts haben, sondern auch durch Einbringen verschiedener Komponenten ihre mechanischen und thermischen Eigenschaften den jeweiligen Belastungen des Bauteils entsprechend angepasst werden können.

Für derartige Bauteile werden gefüllte Kunststoffe verwendet. Die Formmasse enthält dabei einen Thermoplast sowie einen Füllstoff. Als Füllstoff können beliebig geformte Füllstoffe, beispielsweise längliche oder kugelförmige Partikel, eingesetzt werden.

Ein wichtiges Beispiel für derartige gefüllte Kunststoffe sind faserverstärkte Formmassen, die einen Thermoplasten enthalten und durch Fasern, insbesondere Glasfasern, verstärkt sind.

Werden derartige Formmassen in geschmolzenem Zustand in ein Spritzgusswerkzeug eingespritzt, so kommt es während des Füllens der Kavität durch die Schmelzeströmung zu einer Orientierung der Füllstoffe und/oder Ungleichverteilung der Füllstoffe innerhalb der Kunststoffmatrix. Verantwortlich sind unter anderem starke Scher- und Dehnströmungen, die eine Ausrichtung der Füllstoffpartikel bzw. eine Entmischung provozieren. Dies führt zu anisotropen Eigenschaften des Bauteils bezüglich beispielsweise seiner Festigkeit, Steifigkeit, Schwindung oder auch thermischen Leitfähigkeit und Ausdehnung. Die anisotrope Schwindung ist wiederum die Hauptursache für den Bauteilverzug, wie er bei faserverstärkten Spritzgussteilen häufig vorgefunden wird. Im Fließschatten von Strömungshindernissen tritt eine besonders ausgeprägte Anisotropie auf. Bindenähte, wie sie bei einer Vielzahl von Formen in der Spritzgießtechnik unvermeidlich sind, bilden nämlich Faserorientierungen parallel zum Verlauf der Bindenaht aus, so dass diese Bereiche bei einer Beanspruchung senkrecht zur Bindenaht lediglich Festigkeiten in der Größenordnung des nicht-verstärkten bzw. ungefüllten Matrixmaterials aufweisen.

Weitere Probleme, die durch die rheologischen Orientierungsmechanismen der Spritzgießschmelze entstehen, sind bei plättchenartigen Verstärkungsstoffen bzw. Effektpigmenten bekannt. Beispielsweise neigen Mineralverstärkungen dazu, in Bereichen großer Scherorientierung, sich zur Bauteiloberfläche hin auszuwaschen. Dies führt zu einer optischen Beeinträchtigung des Bauteils. Bei Spritzgießmaterialien und insbesondere bei transparenten Thermoplasten, die mit plättchenartigen Pigmenten, z.B. Metallglimmer, dotiert sind, wird die rheologische Orientierung der Pigmentteilchen besonders störend in Bindenahtbereichen oder Bereichen ausgeprägter Scher- und Dehnströmungen empfunden. Die Vorzugsorientierung der Pigmente im Bezug zur Oberfläche wird gestört und es tritt eine deutliche Beeinträchtigung des optisch homogenen Erscheinungsbilds auf. Derartige Störungen des optischen Erscheinungsbildes sind beispielsweise in der EP 0 994 915 B1 oder auch der US 6,194,507 B1 beschrieben, wobei jedoch die Lösung dieses Problems immer in einer verbesserten Mischung aus Pigment und Kunststoffmatrix gesucht wurde.

Insbesondere für faserverstärkte Kunststoffe sind diese Probleme bereits erkannt und es sind im Stand der Technik verschiedene Verfahren aufgezeigt, mit denen eine isotrope Faserorientierung angestrebt wird. So ist dieses Problem beispielsweise in Kunststoffe 11/2004, Seiten 72 bis 74 erwähnt. In Plastverarbeiter, 2003, Band 54, Nr. 6, Seite 38 bis 39 wird zur Lösung dieses Problems vorgeschlagen, die Bindenähte in weniger kritische Bereiche eines Bauteils zu legen. Diese Druckschrift schlägt als weitere mögliche Verbesserung vor, das Gegentaktspritzgießen oder das Scorim-Verfahren einzusetzen. Als weitere Möglichkeit kann die Kavität über mehrere Abschnitte mit zeitlich verzögerter Öffnung in einer sog. Kaskadenschaltung gefüllt werden. Weitere Alternativen werden aufgezeigt, wie beispielsweise das Einstellen eines unterschiedlichen Nachdrucks auf beiden Seiten einer Bindenaht. Durch den hierdurch erzeugten unterschiedlichen Schrumpf zu beiden Seiten der Bindenaht wird ebenfalls eine nicht-orthogonale Orientierung der Fasern angestrebt.

Des Weiteren ist aus JP 62249717 A der Ausgleich der Orientierung von Polymer-Molekülketten im Schmelzezustand durch Ultraschall beim Spritzgießen einer optischen Disk aus Polycarbonat, jedoch ohne Anwesenheit von Füllstoffen, bekannt.

Die DE 101 53 706 A1 beschreibt die Beaufschlagung von Kunststoffen in der Schmelze mit Ultraschall einzelner Frequenzen und offenbart die Merkmale des Oberbegriffes des Ansprüches 1.

Keines der hier genannten Verfahren ist jedoch geeignet, eine zufriedenstellende und ausreichende Isotropierung der Fasern und damit einen ausreichenden Festigkeitszuwachs des Spritzgussteils zu bewirken.

Ähnliche Probleme sind auch bei pigmentgefüllten Kunststoffen bekannt, z.B. bei Effektpigmenten wie Metallglimmer oder Aluflakes, bei denen aufgrund ungleicher Verteilung und Orientierung der Pigmente Bindenähte und Fließlinien in Spritzgussteilen aus einem transparenten Kunststoff sichtbar bleiben. Dies ist beispielsweise von Spiegelschalen (Rückspiegelgehäusen) in der Automobilindustrie bekannt.

Aufgrund hoher Scherkräfte, die angussnah auftreten können, wurden auch bereits Auswaschungen von Mineralverstärkungen beim Angusspunkt von Spritzgussteilen beobachtet.

Aufgabe der vorliegenden Erfindung ist es daher, ein Verfahren zum Ausgleichen von Orientierung von Füllstoffen und/oder Verteilung von Füllstoffen in einem Spritzgussteil bzw. zur Erhöhung der Festigkeit eines Spritzgussteils zur Verfügung zu stellen.

Diese Aufgabe wird durch das Verfahren nach Anspruch 1 gelöst. Vorteilhafte Weiterbildungen des Verfahrens sind in den abhängigen Ansprüchen gegeben.

Entscheidend bei der vorliegenden Erfindung ist nun, dass erkannt wurde, dass die Orientierung von Füllstoffen und/oder Verteilung von Füllstoffen in einer Formmasse aus gefülltem Kunststoff, die in ein Spritzgusswerkzeug eingebracht wird, dadurch entscheidend verbessert (z.B. isotropiert) werden kann, wenn die Formmasse während des Einspritzens in die Spritzgussform mit Schall beaufschlagt wird, wobei der Schall ein Frequenzspektrum aufweist, das mit den Hauptresonanzfrequenzen des Füllstoff-Matrix-Systems im Schmelzezustand übereinstimmt. Derartiger Schall liegt teilweise im oberen Bereich des noch hörbaren Spektrums und teilweise im Ultraschallbereich. Im folgenden wird jedoch für das gesamte Spektrum von 3 kHz bis 1 GHz der Begriff "Ultraschall" verwendet. Hierzu kann beispielsweise an der Spritzgussform ein Schallerzeuger (oder auch mehrere) angeordnet sein, der die gesamte Formkavität oder auch nur lokale Teilbereiche hiervon mit Schall beaufschlagt. Durch den Schall wird der rheologisch bedingten Ungleichverteilung und Orientierung der Füllstoffe zumindest teilweise entgegengewirkt und so die Anisotropie der Verteilung und Orientierung der Füllstoffe verringert. Besonders vorteilhaft ist es, wenn diese erfindungsgemäße Lösung auf sich ausbildende Bindenähte angewandt wird, da hierdurch die Bindenahtfestigkeit quer zur Bindenahtrichtung erhöht werden kann und damit die für die Bauteilgesamtfestigkeit kritischen Bereiche deutlich verstärkt werden können.

Die Schallbeaufschlagung kann auch in der Abkühl- und Verfestigungsphase der Formmasse weitergeführt werden. Hierdurch wird die Kristallinität und damit die Festigkeit des Spritzgussteils noch zusätzlich gesteigert. In einer besonderen Variante wird die Schall-Leistung so eingestellt, dass über die Materialschwingung nutzbare Wärme entsteht und damit der Abkühlprozess der Schmelze verlangsamt bzw. gesteuert werden kann.

Hintergrund der vorliegenden Erfindung ist, wie hier am Beispiel eines faserverstärkten Kunststoffs dargestellt wird, dass das Faser-Matrix-System bedingt durch den Dichte- und E-Modul-Unterschied zwischen den Fasern und der Matrix, beispielsweise einem Thermoplasten, schwingungsfähig ist. Insbesondere im schmelzeflüssigen Zustand der Matrix sind die Fasern relativ frei beweglich und können dementsprechend Eigenschwingungsformen annehmen. Mit geeigneten Schwingungserregern können also die Fasern über die Kavität beim Einspritzen so erregt werden, dass nach dem Gesetz der Entropiezunahme sich ein weniger ausgeprägter, bzw. ein nahezu regelloser Faserorientierungszustand ergibt.

Diese Argumentation gilt in gleicher Weise für den erfindungsgemäßen Ausgleich von Orientierung und Verteilung anderer beliebig geformter Füllstoffe. So kann das oben beschriebene Auswaschen von plättchenartigen Verstärkungs- bzw. Füllstoffen zur Bauteiloberfläche verringert oder verhindert werden. Auch die Sichtbarkeit von Bindenähten und Fließlinien in mit plättchenartigen Pigmenten gefüllten Formmassen wird beeinflusst, so dass sich ein optisch homogenes Erscheinungsbild ergibt.

Es wird ein Frequenzspektrum verwendet, das mit den Hauptresonanzfrequenzen des Füllstoff-Matrix-Systems im Schmelzezustand übereinstimmt. Werden derartige Eigenformen und Eigenfrequenzen beispielsweise in einem vereinfachten Faser-Matrix-Modell berechnet, so zeigt sich eine starke Abhängigkeit der Eigenfrequenzen beispielsweise von dem Steifigkeitsverhältnis zwischen Füllstoff und Matrix. Für Bedingungen, wie sie typischerweise bei glasfaserverstärkten Formmassen im schmelzeflüssigen Zustand anzutreffen sind, errechnen sich die ersten sechs Eigenfrequenzen im Bereich des herkömmlichen Ultraschalls. Für diesen Bereich stehen technisch einfach realisierbare Schwingungserreger (Sonotroden) zur Verfügung. Es ist also besonders vorteilhaft, wenn die Spritzgussform bzw. der gefüllte Kunststoff im Schmelzezustand während des Einspritzens in die Form mit Schall mit einer Frequenz beaufschlagt wird, die im Bereich der Resonanzfrequenzen des gefüllten Kunststoffs und/oder des Füllmaterials in dem gefüllten Kunststoff liegt. Geeignet sind hierfür Schallfrequenzen zwischen 3 kHz und 1 GHz, bevorzugt zwischen 15 kHz und 10 MHz, und besonders bevorzugt zwischen 20 kHz und 60 kHz.

Im Unterschied zum Stand der Technik sucht die vorliegende Erfindung folglich die Lösung für den Ausgleich von Orientierung von Füllstoffen und/oder Verteilung der Füllstoffe, indem das zugrunde liegende Problem, die Anisotropie des Füllstoffs, angegangen wird, nicht in einer weniger nachteiligen Anordnung der weiterhin schwachen Bindenähte oder einer spezifischen Auslegung des Einspritzens der Formmasse. Vielmehr wird die Isotropie und beispielsweise damit die Festigkeit des Spritzgussteils und/oder das optische Erscheinungsbild durch eine spezielle Behandlung der Formmasse während des Einspritzens im schmelzeflüssigen Zustand und ggf. auch während der Verfestigungs- und Abkühlphase verbessert. Es wird also verfahrenstechnisch mehr aus denselben bereits bekannten Materialien ohne jegliche Änderung an dem Design des Spritzgussteils noch an dem prinzipiellen Aufbau des Spritzgusswerkzeugs herausgeholt. Dass eine derartige Schallanwendung die Verteilung und Orientierung der Füllstoffe der Spritzgussteile verbessert, ist im Stand der Technik weder bekannt noch nahegelegt.

Als Matrixmaterial eignen sich alle für Spritzguss geeigneten Polymere, wie Thermoplaste, Duroplaste oder vulkanisierende Elastomere oder deren Blends, z.B. Mischungen oder Legierungen. Geeignete Thermoplaste sind Homopolyamide, Copolyamide oder deren Polymerblends. Auch die Verwendung von Polystyrolen, Polyolefinen, Celluloseester, Celluloseether, Polymethacrylsäureester u.ä. sind möglich. Für das erfindungsgemäße Verfahren können zum Beispiel Polyamide (bevorzugt PA 46, PA 6, PA 66, PA 612, PA 11, PA 12, teilaromatische Polyamide, wie z.B. PA 6T/6I, PA 6I/6T/66, PA 6T/66 oder PA 9T, und transparente Polyamide), Polyester (bevorzugt PET, PBT, PEN und PBN), Polycarbonate, Polyolefine (bevorzugt PE und PP), Polyoxymethylen (POM) sowie transparente Polymere (bevorzugt ABS, SAN, PC, PMMA etc. neben den bereits erwähnten transparenten Polyamiden) eingesetzt werden. Auch Blends (Mischungen u. dgl.) solcher Polymere mit den genannten oder weiteren Polymeren kommen in Frage.

Bevorzugte transparente Polyamide sind solche mit cycloaliphatischen Monomerbausteinen wie Polyamid PACM 12 und Polyamid MACM 12 sowie entsprechende Copolyamide und Legierungen dieser Polyamide untereinander. Zur Nomenklatur wird verwiesen auf S. Schaaf: Polyamide, Werkstoffe für die High-Technologie und das moderne Leben, Verlag moderne Industrie, Landsberg 1997. Für Bauteile mit Effektpigmenten wird besonders bevorzugt Grilamid^{®} TR, ein transparentes Polyamid, das bei der EMS-CHEMIE AG, CH-7013 Domat/Ems erhältlich ist, verwendet.

Für besonders steife, dimensionsstabile Formteile kann Grivory^{®} GV und HT, ein glasfaserverstärktes, partiell aromatisches Polyamid, erhältlich bei der EMS-CHEMIE AG, CH-7013 Domat/Ems, zum Einsatz kommen.

Als Material für die spritzgusstechnische Herstellung der vorbeschriebenen Formen eignen sich u.a. thermoplastische Kunststoffe, insbesondere solche aus einem glasfaserverstärkten Polymer, wobei das Polymer mit Vorteil ausgewählt ist aus der Gruppe der Polyamide und Copolyamide und einen Schmelzpunkt von mindestens 250 °C besitzt, wie z.B. PA66 und PA46. Besonders bevorzugt ist die Verwendung eines Polymers, bei welchem es sich um ein partiell aromatisches, teilkristallines Copolyamid mit einem Schmelzpunkt im Bereich von 300 °C bis 350 °C handelt. Ein solches speziell gut geeignetes glasfaserverstärktes Polymer ist beispielsweise unter der Bezeichnung "GRIVORY^{®} HTV-5H1" von der Firma EMS-CHEMIE AG/EMS-GRIVORY, Domat/Ems, Schweiz, im Handel erhältlich. Das Material eignet sich speziell zur Herstellung äußerst steifer, fester, wärmebeständiger und maßgenauer Spritzgussteile und zeichnet sich überdies durch sehr gute Chemikalienbeständigkeit aus.

Die verwendeten Kunststoffe können selbstverständlich die üblichen Zusätze wie Weichmacher, Schlagzähmodifikatoren, Stabilisatoren, Flammschutzmittel, Antistatikmittel (Russ, Kohlenstofffasern, Graphitfibrillen), Verstärkungsfasern, Pigmente, Mineralien, Nano-composites, Farbstoffe etc. enthalten, wobei diese Zusätze Füllstoffe im Sinne der vorliegenden Erfindung darstellen.

Als Füllstoffe können weiterhin beliebig geformte Füllstoffe, beispielsweise Pigmente, insbesondere jedoch auch Fasern in einer faserverstärkten Formmasse, beispielsweise Glasfasern, Kohlenstofffasern, Aramidfasern und/oder Keramikfasern, eingesetzt werden.

Derartige Compositematerialien sind bekannt durch ihre gute Formbarkeit und hohe mechanische Festigkeit.

Die Schallbeaufschlagung erfolgt bei der vorliegenden Erfindung entweder mit einem konstanten Frequenzspektrum oder es können Schallgeber mit verstellbarem Frequenzspektrum eingesetzt werden. Mit letzterem kann die Frequenz in dem in Betracht kommenden Bereich stufenlos oder gestuft verändert werden, so dass die jeweilige Formmasse mit der für diese Formmasse optimalen Frequenz beaufschlagt werden kann.

Besonders vorteilhaft kann der Schallgeber (Sonotrode) auch an einer bestimmten Stelle des Spritzgusswerkzeuges, beispielsweise benachbart zu einer Bindenaht, angeordnet werden, so dass die sich ausbildende Bindenaht lokal mit Schall beaufschlagt wird. Beispielsweise kann bei einer Bindenaht, die sich hinter einem Steg oder einem Dorn ausbildet, im Bereich hinter dem Steg oder dem Dorn ein Schallkopf angeordnet werden. Es können auch mehrere Schallgeber (Sonotroden) an verschiedenen Positionen des Spritzgusswerkzeugs zum Einsatz kommen. Vorteilhaft ist eine Anordnung mit zwei Sonotroden, die im Gegentakt schwingen.

Erfindungsgemäß hergestellte Spritzgussteile finden vielseitige Verwendung, beispielsweise in der Automobilindustrie als Ersatz für bisher metallische Teile. Aber auch jedes andere Spritzgussteil, das im Einsatz einer mechanischen Belastung (z.B. Zug oder Druck) oder einer thermischen Belastung (z.B. hohe oder tiefe Temperaturen, starke Temperaturwechsel, thermische Verformung) unterliegt, kann durch das erfindungsgemäße Verfahren in seinen diesbezüglichen Eigenschaften erheblich verbessert werden.

Bei vielen Spritzgussteilen spielt auch das optische Erscheinungsbild der Oberfläche eine wichtige Rolle. Insbesondere beim Einsatz von Effektpigmenten in transparenten Polymeren, um z.B. einen Metallic-Effekt zu erzielen (z.B. bei Außenrückspiegelgehäusen von Autos), können durch die Orientierung oder Konzentrationsunterschiede störende Fließlinien oder Bindenähte zum Vorschein treten. Auch solchen optischen Unregelmäßigkeiten an der Formteiloberfläche kann mit dem Schall bzw. Ultraschall erfindungsgemäß entgegengewirkt werden.

## Patentansprüche

1. Verfahren zum Ausgleichen von Orientierung von Füllstoffen und/oder Verteilung von Füllstoffen in einer Formmasse enthaltend oder bestehend aus einem gefüllten Kunststoff eines in einer Spritzgussform hergestellten Spritzgussteils, das die Formmasse enthält oder aus ihr besteht, wobei die Spritzgussform und die Formmasse während des Spritzgießens in der Spritzgussform mit Schall beaufschlagt wird,
**dadurch gekennzeichnet,**
**dass** der Schall ein Frequenzspektrum aufweist, das mit den Hauptresonanzfrequenzen des Füllstoff-Matrix-Systems im Schmelzezustand übereinstimmt.

2. Verfahren nach dem vorhergehenden Anspruch, **dadurch gekennzeichnet, dass** die Spritzgussform und die Formmasse während des Einspritzens der Formmasse und gegebenenfalls zusätzlich während der Verfestigungs- oder Abkühlphase der Formmasse mit Schall beaufschlagt wird.

3. Verfahren nach einem der beiden vorhergehenden Ansprüche, **dadurch gekennzeichnet, dass** die Spritzgussform und die Formmasse am Angusspunkt und/oder im Fließschatten von Strömungshindernissen und/oder in mindestens einem Bereich, in dem die Formmasse eine Bindenaht ausbildet, mit Schall beaufschlagt wird.

4. Verfahren nach einem der vorhergehenden Ansprüche, **dadurch gekennzeichnet, dass** die Spritzgussform mit einem Schall-Frequenzspektrum zwischen 3 kHz und 1 GHz beaufschlagt wird, bevorzugt zwischen 15 kHz und 10 MHz, besonders bevorzugt zwischen 20 kHz und 60 kHz.

5. Verfahren nach einem der vorhergehenden Ansprüche, **dadurch gekennzeichnet, dass** die Spritzgussform mit Schall mit Frequenzen beaufschlagt wird, die von den Resonanzfrequenzen der Formmasse und/oder der Füllstoffe in der Formmasse um höchstens 10 % abweichen.

6. Verfahren nach einem der vorhergehenden Ansprüche, **dadurch gekennzeichnet, dass** die Formmasse mindestens Thermoplaste, Duroplaste, vulkanisierende Elastomere und/oder deren Blends als Matrixkomponente des gefüllten Kunststoffs enthält oder die Matrixkomponente des gefüllten Kunststoffs daraus besteht.

7. Verfahren nach dem vorhergehenden Anspruch, **dadurch gekennzeichnet, dass** der thermoplastische Kunststoff ausgewählt ist aus der Gruppe der Polyamide, Polystyrole, Polyolefine, Polyester, Polycarbonate, Celluloseester, Celluloseether, Polymethacrylsäureester, Polyoxymethylene, Fluorcarbonpolymere und Blends hiervon, gegebenenfalls mit weiteren Inhaltsstoffen.

8. Verfahren nach Anspruch 6, **dadurch gekennzeichnet, dass** der thermoplastische Kunststoff ein Homopolyamid, ein Copolyamid und/oder deren Polymerblends enthält oder daraus besteht.

9. Verfahren nach einem der beiden vorhergehenden Ansprüche, **dadurch gekennzeichnet, dass** der thermoplastische Kunststoff ausgewählt ist aus der Gruppe Polyamid 46 (PA 46), Polyamid 6 (PA 6), Polyamid 66 (PA 66), Polyamid 612 (PA 612), Polyamid 11 (PA 11), Polyamid 12 (PA 12), teilaromatische Polyamide, wie beispielsweise PA 6T/6I, PA 6I/6T/66, PA 6T/66 oder PA 9T, transparente Polyamide, insbesondere mit cycloaliphatischen Monomerbausteinen, wie PACM12 und MACM12, transparente Polymere, beispielsweise ABS, SAN, Polycarbonat (PC), Polymethylmethacrylat (PMMA), Polyethylenterephthalat (PET), Polybutylenterephthalat (PBT), Polyethylennaphthalat (PEN), Polybutylennaphthalat (PBN), Polyolefine wie Polyethylen (PE) oder Polypropylen (PP), Polyoxymethylen (POM) und Mischungen hiervon.

10. Verfahren nach Anspruch 6, **dadurch gekennzeichnet, dass** die Matrixkomponente transparent ist.

11. Verfahren nach einem der vorhergehenden Ansprüche, **dadurch gekennzeichnet, dass** die Füllstoffe zumindest teilweise einen der Stoffe aus der folgenden Gruppe längliche Partikel, kugelförmige Partikel, plättchenförmige Partikel, faserförmige Partikel, Pigmentpartikel in beliebigen oder den genannten Formen und Mineralpartikel in beliebigen oder den genannten Formen, Zusätze wie Weichmacher, Schlagzähmodifikatoren, Stabilisatoren, Flammschutzmittel, Antistatikmittel (Russ, Kohlenstofffasern, Graphitfibrillen), Verstärkungsfasern (insbesondere Glasfasern), Pigmente, Mineralien, Nanocomposites, Farbstoffe etc. umfassen.

12. Verfahren nach einem der vorhergehenden Ansprüche, **dadurch gekennzeichnet, dass** die Füllstoffe zumindest teilweise Fasern sind und die Formmasse eine faserverstärkte Formmasse ist.

13. Verfahren nach dem vorhergehenden Anspruch, **dadurch gekennzeichnet, dass** die Faserverstärkung der faserverstärkten Formmasse als Füllstoff Glasfasern, Kohlenstofffasern, Aramidfasern und/oder keramische Fasern enthält oder daraus besteht.

## Claims

1. Method for equalising the orientation of fillers and/or distribution of fillers in a moulding compound containing or comprising a filled plastic material of an injection moulded part which is produced in an injection mould and contains or comprises the moulding compound, the injection mould and the moulding compound is supplied with sound during the injection moulding in the injection mould,
**characterised in that**
the sound comprises a frequency spectrum which corresponds to the main resonance frequencies of the filter-matrix system in the melt state.

2. Method according to the preceding claim, **characterised in that** the injection mould and the moulding compound are supplied with sound during injection of the moulding compound and if necessary in addition during the solidifying or cooling phase of the moulding compound.

3. Method according to one of the two preceding claims, **characterised in that** the injection mould and the moulding compound is supplied with sound at the sprue point and/or in the flow shadow of flow impediments and/or in at least one region in which the moulding compound forms a joint line.

4. Method according to one of the preceding claims, **characterised in that** the injection mould is supplied with sound at frequencies between 3 kHz and 1 GHz, preferably between 15 kHz and 10 MHz, particularly preferred between 20 kHz and 60 kHz.

5. Method according to one of the preceding claims, **characterised in that** the injection mould is supplied with sound at frequencies which deviate from the resonance frequencies of the moulding compound and/or of the fillers in the moulding compound by at most 10%.

6. Method according to one of the preceding claims, **characterised in that** the moulding compound contains at least thermoplastics, duroplastics, vulcanising elastomers and/or blends thereof as matrix component of the filled plastic material or the matrix component of the filled plastic material comprises these.

7. Method according to the preceding claim, **characterised in that** the thermoplastic plastic material is selected from the group of polyamides, polystyrenes, polyolefins, polyesters, polycarbonates, cellulose esters, cellulose ethers, polymethacrylic acid esters, polyoxymethylenes, fluorocarbon polymers and blends thereof, if necessary with further components.

8. Method according to claim 6, **characterised in that** the thermoplastic plastic material contains or comprises a homopolyamide, a copolyamide and/or polymer blends thereof.

9. Method according to one of the two preceding claims, **characterised in that** the thermoplastic plastic material is selected from the group polyamide 46 (PA 46), polyamide 6 (PA 6), polyamide 66 (PA 66), polyamide 612 (PA 612), polyamide 11 (PA 11), polyamide 12 (PA 12), partially aromatic polyamides, such as for example PA 6T/6I, PA 6I/6T/66, PA 6T/66 or PA 9T, transparent polyamides, in particular with cycloaliphatic monomer constitutional units, such as PACM12 and MACM12, transparent polymers, for example ABS, SAN, polycarbonate (PC), polymethylmethacrylate (PMMA), polyethylene terephthalate (PET), polybutylene terephthalate (PBT), polyethylene naphthalate (PEN), polybutylene naphthalate (PBN), polyolefins such as polyethylene (PE) or polypropylene (PP), polyoxymethylene (POM) and mixtures thereof.

10. Method according to claim 6, **characterised in that** the matrix component is transparent.

11. Method according to one of the preceding claims, **characterised in that** the fillers comprise at least partially one of the materials from the following group, oblong particles, spherical particles, plate-shaped particles, fibrous particles, pigment particles in any or in the mentioned forms and mineral particles in any or the mentioned forms, additives, such as plasticisers, impact strength modifiers, stabilisers, flameproofing agents, anti-static agents (carbon black, carbon fibres, graphite fibrils), reinforcing fibres (in particular glass fibres), pigments, minerals, nanocomposites, colourants, etc.

12. Method according to one of the preceding claims, **characterised in that** the fillers are at least partially fibres and the moulding compound is a fibre-reinforced moulding compound.

13. Method according to the preceding claim, **characterised in that** the fibre reinforcement of the fibre-reinforced moulding compound contains or comprises as filler, glass fibres, carbon fibres, aramide fibres and/or ceramic fibres.

## Revendications

1. Procédé pour égaliser l'orientation de matières de charge et/ou la répartition de matières de charge dans une masse de moulage, comprenant ou constituée d'une matière plastique armée, pour une pièce moulée par injection fabriquée dans un moule d'injection, qui contient la masse de moulage ou en est constituée, le moule d'injection et la masse de moulage étant soumis à des ondes sonores dans le moule d'injection,
**caractérisé en ce que**
les ondes sonores présentent un spectre de fréquences qui coïncide avec les fréquences de résonance principales du système de la matrice de matière de charge à l'état de fusion.

2. Procédé selon la revendication précédente,
**caractérisé en ce que**
le moule d'injection et la masse de moulage sont soumis à des ondes sonores pendant l'injection de la masse de moulage et, le cas échéant, en outre pendant la phase de solidification ou de refroidissement de la masse de moulage.

3. Procédé selon l'une quelconque des revendications précédentes,
**caractérisé en ce que**
le moule d'injection et la masse de moulage sont soumis à des ondes sonores au niveau du point de départ et/ou dans l'angle mort d'obstacles à l'écoulement et/ou dans au moins une zone où la masse de moulage forme un joint de liaison.

4. Procédé selon l'une quelconque des revendications précédentes,
**caractérisé en ce que**
le moule d'injection est soumis à des ondes sonores d'un spectre de fréquence compris entre 3 kHz et 1 GHz, de préférence entre 15 kHz et 10 MHz, de préférence encore entre 20 kHz et 60 kHz.

5. Procédé selon l'une quelconque des revendications précédentes,
**caractérisé en ce que**
le moule d'injection est soumis à des ondes sonores ayant des fréquences qui ne s'écartent pas de plus de 10 % des fréquences de résonance de la masse de moulage et/ou de la matière de charge.

6. Procédé selon l'une quelconque des revendications précédentes,
**caractérisé en ce que**
la masse de moulage contient au moins des matières thermoplastiques, thermodurcissables, des élastomères vulcanisants et/ou des mélanges de ceux-ci, en tant que composante de la matrice de la matière plastique armée, ou que la composante de la matrice de la matière plastique armée en est constituée.

7. Procédé selon la revendication précédente,
**caractérisé en ce que**
la matière thermoplastique est sélectionnée dans un groupe composé des polyamides, polystyrènes, polyoléfines, polyesters, polycarbonates, esters cellulosiques, éthers cellulosiques, esters d'acide polyméthacrylique, poly-oxyméthylènes, polymères de fluorocarbone, et de mélanges de ceux-ci, le cas échéant contenant d'autres substances constitutives.

8. Procédé selon la revendication 6,
**caractérisé en ce que**
la matière thermoplastique contient un homopolyamide, un copolyamide, et/ou des mélanges polymères de ceux-ci, ou en est constituée.

9. Procédé selon l'une quelconque des revendications précédentes,
**caractérisé en ce que**
la matière thermoplastique est sélectionnée dans un groupe comprenant du polyamide 46 (PA 46), du polyamide 6 (PA 6), du polyamide 66 (PA 66), du polyamide 612 (612), du polyamide 11 (PA 11), du polyamide 12 (PA 12), des polyamides partiellement aromatiques tels que, par exemple, les PA 6T/6I, PA 6I/6T/66, PA 6T/66 ou PA 9T, des polyamides transparents, en particulier ceux contenant des composants monomères cyclo-aliphatiques tels que, par exemple, du PACM12 et du MACM12, des polymères transparents tels que, par exemple, de l'ABS, du SAN, du polycarbonate (PC), du poly-méthyle-méthacrylate (PMMA), du polyéthylène-téréphtalate (PET), du polybutylène-téréphtalate (PBT), du polyéthylène-naphtalate (PEN), du polybutylène-naphtalate (PBN), des polyoléfines tels que du polyéthylène (PE) ou du polypropylène (PP), du poly-oxyméthylène (POM), et des mélanges de ceux-ci.

10. Procédé selon la revendication 6,
**caractérisé en ce que**
la composante de la matrice est transparente.

11. Procédé selon l'une quelconque des revendications précédentes,
**caractérisé en ce que**
les matières de charge comprennent au moins partiellement l'une des substances du groupe suivant : des particules longilignes, des particules sphériques, des particules en forme de plaquettes, des particules en forme de fibres, des particules pigments de forme quelconque ou de forme de celles citées, et des particules minérales de forme quelconque ou de forme de celles citées, des additifs tels que de plastifiants, des modificateurs de résilience, des stabilisateurs, des agents ignifuges, des agents antistatiques (suie, fibres de carbone, fibrilles de graphite), des fibres de renforcement (en particulier des fibres de verre), des pigments, des minéraux, des nano-composites, des colorants, etc.

12. Procédé selon l'une quelconque des revendications précédentes,
**caractérisé en ce que**
les matières de charge sont au moins en partie des fibres, et **en ce que** la masse de moulage est une masse de moulage armée de fibres.

13. Procédé selon la revendication précédente,
**caractérisé en ce que**
le renforcement par fibres de la masse de moulage armée de fibres contient, en tant que matière de charge, des fibres de verre, des fibres de carbone, des fibres d'aramide, et/ou des fibres céramiques, ou en est constitué.
